# EUROPÄISCHE PATENTSCHRIFT

(11) **EP 4 031 773 B1**
(45) Veröffentlichungstag und Bekanntmachung des Hinweises auf die Patenterteilung: **30.08.2023**
(21) Anmeldenummer: 20776094.3
(22) Anmeldetag: 16.09.2020
(51) Int. Cl.: F04D 25/06, F04D 25/08, F04D 29/08, F04D 29/42, F04D 29/52, F04D 29/64, H02K 1/18, H02K 5/10, H02K 5/24, F04D 29/62, H02K 5/173, H02K 7/14

(54) **VERBINDUNG ZUMINDEST ZWEIER KOMPONENTEN EINES LÜFTERS UND VERFAHREN ZUM VERBINDEN DER ZWEI KOMPONENTEN DES LÜFTERS MITEINANDER**
CONNECTION OF AT LEAST TWO COMPONENTS OF A FAN AND METHOD TO CONNECT THE TWO COMPONENTS TO ONE ANOTHER
ASSEMBLAGE D'AU MOINS DEUX ÉLÉMENTS D'UN VENTILATEUR ET PROCÉDÉ D'ASSEMBLAGE DE CES DEUX ÉLÉMENTS ENTRE EUX

(30) Priorität: 16.09.2019 DE 102019214087
(43) Veröffentlichungstag der Anmeldung: 27.07.2022
(73) Patentinhaber: EBM-Papst Mulfingen GmbH&CO. KG, 74673 Mulfingen (DE)
(72) Erfinder: HAMMEL, Christian, 74629 Pfedelbach-Oberohrn (DE); RÜCKERT, Christian, 97922 Lauda-Königshofen (DE)
(74) Vertreter: Jostarndt Patentanwalts-AG
(86) Internationale Anmeldenummer: PCT/EP2020/075901
(87) Internationale Veröffentlichungsnummer: WO 2021/053034

(56) Entgegenhaltungen:
- DE-A1- 10 314 894
- DE-U1- 9 108 745
- DE-U1-202006 018 454
- JP-U- S62 101 350
- US-A1- 2009 096 304
- US-A1- 2012 051 940

## Beschreibung

Die vorliegende Erfindung betrifft die Verbindungsweise von Komponenten eines Lüfters. Im Stand der Technik ist es bekannt, Komponenten eines Lüfters zu verschweißen oder zu verklemmen. Eine weitere alternative Vorgehensweise ist das Verschrauben von Komponenten.

Eine Aufgabe der vorliegenden Erfindung kann darin gesehen werden, einen geräuscharmen Lüfter vorzusehen. Eine weitere Aufgabe kann darin gesehen werden, zusätzliche, mit der Funktion nicht direkt in Zusammenhang stehende Komponenten wie Schrauben und Schraublöcher, Kleber und Klebeflächen einzusparen. Eine weitere Aufgabe wird darin gesehen, Kosten einzusparen, indem zulässige axiale Toleranzen erhöht werden können.

Diese Aufgaben werden mit den Merkmalen der unabhängigen Ansprüche gelöst. Die Unteransprüche lösen Aufgaben, die sich aus den im Folgenden wiedergegebenen Wirkungen und Effekten ableiten lassen.

Vorgesehen ist demgemäß ein Lüfter, aufweisend mehrere Komponenten sowie ein biegbares Rastelement, welches dazu ausgestaltet ist, bei einem Fügevorgang der Komponenten miteinander einen Halteabschnitt unter einer Umbiegung des Rastelements zu überwinden und nach Überwindung des Halteabschnitts unter einer Zurückbiegung einzurasten und eine eingerastete Position einzunehmen, wobei das Rastelement über eine bei dem Fügevorgang zwischen den Komponenten deformierten Weichkomponente in der eingerasteten Position gehalten wird.

Bei dem Lüfter handelt es sich vorzugsweise um einen Lüfter zum Einsatz in der Kältetechnik. Derartige Lüfter sollen möglichst geräuscharm laufen. Die Komponenten sind mit den Rastelementen und Halteabschnitten miteinander fügbare Komponenten aus der nicht abschließenden Liste:
- Motorträger,
- Rotor,
- Stator,
- Statorbuchse,
- Statorträger, und
- Wandring.

Obwohl die Komponenten der Anmelderin überwiegend aus Kunststoffen gebildet sein werden, ist die Erfindung auch bei metallischen Komponenten anwendbar. Bei dem Rastelement kann es sich um einen konventionellen, stiftartigen Pin mit einer Rastnase handeln. Es kann sich aber auch um eine Zunge handeln, die in eine Richtung vorgebogen ist und nach Überwindung des Halteabschnitts in diese Richtung schnappt und die Komponenten dadurch hält, dass die Zunge den Halteabschnitt nicht mehr überwinden kann, ohne zurückgezogen zu werden. Dieser Zustand tritt in der eingerasteten Position nach dem Fügevorgang ein. Die Weichkomponente kann aus Silikon, Kautschuk, Elastomer und sonstigen Dichtungsmaterialien gebildet sein. Ein Material für die Weichkomponente ist so auszuwählen, dass die Weichkomponente komprimierbar bzw. deformierbar ist und elastisch, so dass sie im deformierten Zustand eine Kraft zwischen den Komponenten ausübt und diese auseinander drückt, gegen die jeweiligen Rastelemente und dazugehörigen Halteabschnitte.

Dadurch, dass die Weichkomponente die Rastelemente unterstützt, führen Schwingungen nicht zu einem geräuschvollen Aneinanderschlagen der Rastelemente an den Halteabschnitten. Die Weichkomponente wirkt auch dämpfend. Eine Verklebung oder Verschraubung kann entfallen. Die Komponenten können vorzugsweise so montiert werden, dass die Rastelemente in die korrespondierenden Halteabschnitte passen, wodurch ein einfaches selbsterklärendes Poka-Yoke-Prinzip realisiert wird, das auch in weiteren offenbarten Ausgestaltungen aufgegriffen bzw. näher spezifiziert wird. Durch die Verspannung können Toleranzen ausgeglichen werden, was im Umkehrschluss bedeutet, dass die zulässigen Toleranzen erhöht werden können, da sie keinen negativen Einfluss haben können.

In einer nicht durch die Erfindung beanspruchten Ausgestaltung ist eine erste Komponente ein Statorhalter, mit einer sich um eine axiale Richtung erstreckenden, teilweise zylindrisch geformten Statorbuchse, und eine zweite Komponente ist ein Stator, wobei die Rastelemente entgegen einer radialen Richtung_biegsam sind und wobei der Halteabschnitt an einer Nut angeformt ist, in welcher die Rastelemente die eingerastete Position einnehmen.

Die Statorbuchse nimmt den Stator auf. Die Statorbuchse ist korrespondierend zu einer Nabe des Stators unrund ausgeformt, so dass sich ein passgenauer Sitz des Stators auf der Statorbuchse ergibt. Bei einer Ausführungsform mit unrunder Nabe bzw. unrunder Statorbuchse kann der Stator nur in einer Winkellage montiert werden (Poka-Yoke Prinzip). In der Statorbuchse selbst kann ein Lager für eine rotierbare Lagerung des Rotors angeordnet sein.

In einer nicht durch die Erfindung beanspruchten Ausgestaltung wird die Weichkomponente in der axialen Richtung komprimiert wobei das Rastelement beim Überwinden des Halteabschnitts in einer radialen Richtung gebogen wird, und wobei das Rastelement in der eingerasteten Position von der deformierten Weichkomponente in axialer Richtung gegen den Halteabschnitt gedrückt wird. Dadurch ergibt sich ein spielfreier Sitz in axialer Richtung. Schwingungen können nicht dazu führen, dass das Rastelement gegen den Halteabschnitt schlägt und dabei Geräusche emittiert.

Erfindungsgemäß ist eine Komponente ein Statorhalter (auch: Statorträger) und eine damit fügbare Komponente ein Wandring, wobei das Rastelement sich in axialer Richtung A aus dem Wandring erstreckt, und wobei die deformierte Weichkomponente das Rastelement in radialer Richtung nach außen drückt.

In einer Ausgestaltung trägt der Statorhalter einen Stator und der Wandring ist an einer dem Lüfter übergeordneten Komponente, insbesondere an einem zu kühlenden Abschnitt eines PCs montierbar

Dadurch ergibt sich ein spielfreier Sitz des Statorhalters an dem Wandring. Schwingungen können durch die Weichkomponente gedämpft werden, so dass sie nicht über den Wandring in die übergeordnete Komponente eingeleitet werden.

Erfindungsgemäß ist die deformierbare Weichkomponente zwischen einen Wandringkragen, aus dem sich die Rastelemente erstrecken und einem zylindrischen Abschnitt des Statorhalters angeordnet und übernimmt neben der die Rastelemente mit einer Vorspannung andrückenden Funktion eine abdichtende Funktion, so dass Feuchtigkeit nicht zwischen dem Statorhalter und dem Wandringkragen an den Stator gelangen kann.

Demnach wirkt die Weichkomponente dreifach. In einer ersten Funktion dichtet die Weichkomponente den Lüfter ab. In einer weiteren Funktion wirkt die Weichkomponente dämpfend, indem Schwingungen in Wärme umgewandelt werden. Weiterhin erzeugt die Weichkomponente Vorspannkräfte, um ein verbleibendes Spiel an den Rastelement/Halteelement- Verbindungen zu unterbinden.

In einer Ausgestaltung sind an dem Weichelement drei umlaufende Dichtlippen angeformt.

Durch die dreifache Ausgestaltung der Dichtung wird eine hohe Vorspannung bei gleichzeitiger Maximierung der Dichtwirkung gewährleistet. Weiterhin sind drei Dichtlippen nicht so steif wie ein entsprechender, die Dichtlippen umfassender Block aus Weichkomponentenmaterial, was wiederum die Montierbarkeit des Wandrings an dem Statorträger erleichtert.

In einer Ausgestaltung sind die Halteabschnitte an dem Statorhalter in axialer Richtung angrenzend an den zylindrischen Abschnitt angeformt, wobei die Halteabschnitte an sich in radialer Richtung nach außen erstreckenden Käfigen ausgebildet sind, wobei jeweils zwei Rastelemente einem einzigen Käfig zugeordnet sind.

Die Rastelemente sind somit paarweise angeordnet. Ein Versagen eines Rastelements ist insofern unerheblich, wenn ein dichtbenachbartes, also zu dem Paar gehörendes Rastelement noch vorhanden ist. Weiterhin wird ein unbefugtes Öffnen erschwert, denn hierfür müssten an jedem Käfig jeweils zwei Rastelemente zurückgebogen werden.

In einer weiteren Ausgestaltung ist an dem Käfig zwischen den zwei Rastelementen eine Trennwand ausgebildet, die sich einstückig von dem Statorhalter bis zu den Halteabschnitten erstreckt.

Nach dieser Ausgestaltung kann bei einem Bruch des Käfigs im Bereich eines Halteabschnitts oder einem Bruch eines der zwei Rastelemente ein benachbarter Halteabschnitt bzw. ein benachbartes Rastelement die eingerastete Position halten, da in die Trennwand so ausgebildet ist, dass sie noch mit dem jeweils verbleibenden, nicht zerbrochenen Halteabschnitt verbunden bleibt.

In einer Ausgestaltung ist ein Rotor angrenzend an den Statorhalter um die axiale Richtung rotierbar montierbar, wobei an dem Rotor eine zu dem Statorhalter korrespondierende Labyrinthdichtung angeordnet ist.

Die Labyrinthdichtung ist berührungsfrei und damit reibungsarm. Sie ist zwar nicht absolut dicht, aber im Betrieb rotiert der Rotor und schleudert dabei in die Labyrinthdichtung gelangende Partikel in radialer Richtung nach außen.

Zur Montage vorgesehen ist ein Verfahren zum Montieren eines Lüfters mit mehreren Komponenten gemäß Anspruch 7.

Durch die Schritte des Verfahrens können Komponenten des Lüfters miteinander verbunden werden. Der Lüfter ist kostengünstig herstellbar, da die Toleranzen verhältnismäßig groß bleiben können.

Weitere Einzelheiten und Vorteile der Erfindung werden anhand der in den Zeichnungen dargestellten Ausführungsbeispiele deutlich. Es zeigen
Fig. 1: einen Statorhalter mit einer daran angeformten Statorbuchse,
Fig. 2: eine Schnittansicht des Statorhalters aus Figur 1, mit einem auf die Statorbuchse aufgeschobenen Stator,
Fig. 3: eine perspektivische Darstellung des Statorhalters mit aufgeschobenen Stator,
Fig. 4: einen Wandring mit einem Wandringboden und einem Wandringkragen sowie sich daraus in axialer Richtung erstreckenden Rastelementen,
Fig. 5: eine perspektivische Darstellung eines montierten Lüfters, bei dem die Komponente Wandring an der Komponente Statorträger angebracht wurde und zweifach vorhandene Rastelemente in entsprechende Käfige am Statorträger eingerastet sind,
Fig. 6: einen Schnitt durch das Rastelement, einen Abschnitt eines Rotors, einen Abschnitt eines Statorhalters und eines Wandrings, und
Fig. 7: schematisch einen Verfahrensablauf zur Montage eines Lüfters.

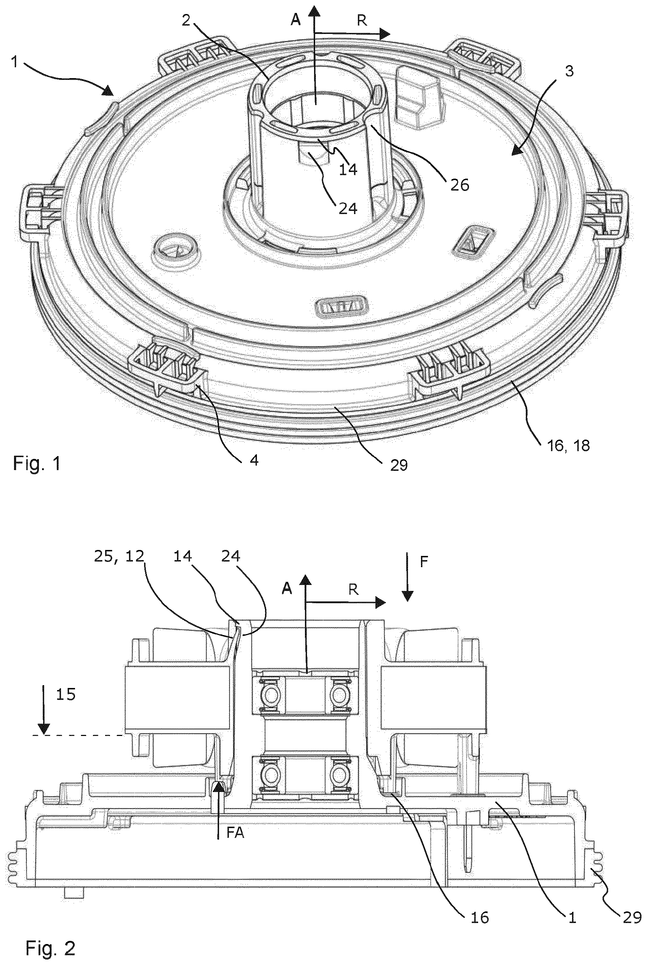

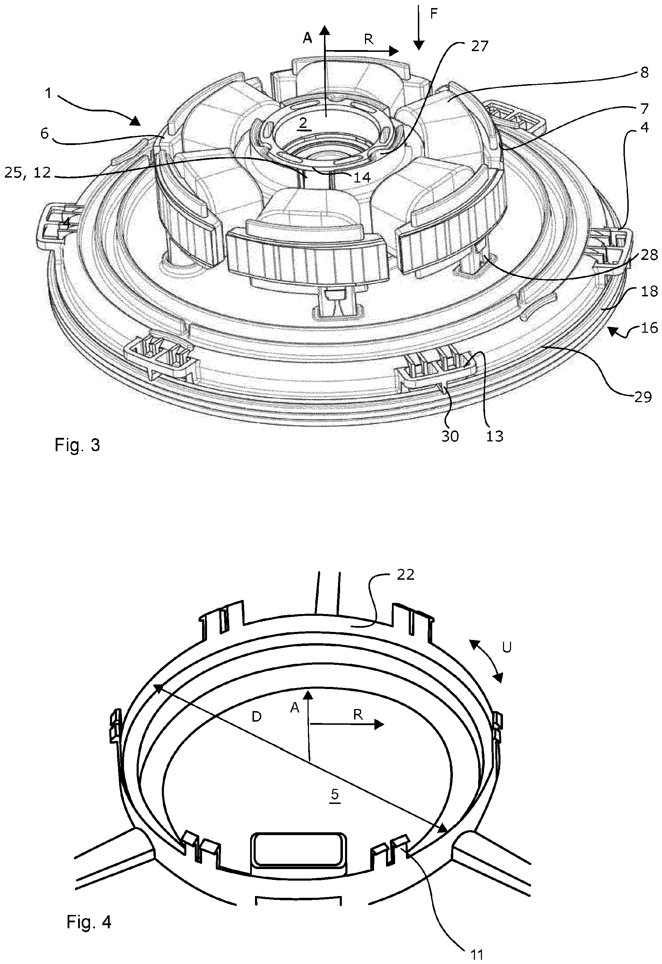

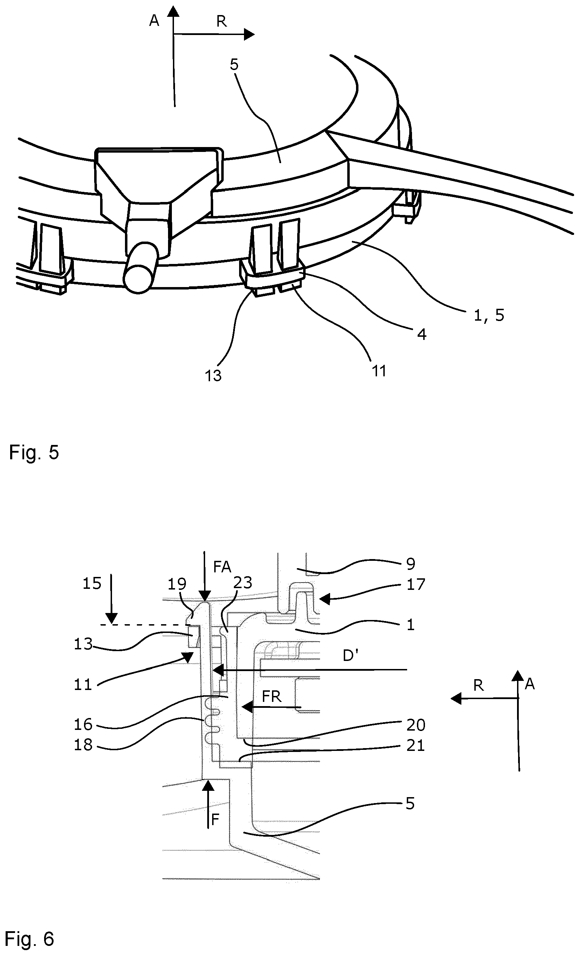

Figur 1 zeigt eine Komponente, die ein Statorhalter 1 ist. Der Statorhalter 1 erstreckt sich in einer axialen Richtung A. Der Statorhalter 1 weist eine Statorbuchse 2 auf, die sich einstückig aus einem im Wesentlichen rund ausgebildeten Statorhalterkörper 3 erstreckt. Der Statorhalter 1 ist abgesehen von funktionellen Elementen, wie Käfigen 4 zur Aufnahme von Rastelementen im Wesentlichen rotationssymmetrisch aufgebaut. Eine mit dem Statorhalter 1 fügbare Komponente ist ein in Figur 4 dargestellt, es handelt sich bei der Komponente um einen Wandring 5. Eine weitere mit dem Statorhalter 1 fügbare Komponente ist ein Stator 6. Der Stator 6 weist Eisenkerne 7 und Wicklungen 8 auf, die intermittierend bestromt werden können, um einen Rotor 9 anzutreiben (der Rotor 9 ist lediglich in Figur 6 teilweise dargestellt). Der Wandring 5 hält die übrigen Komponenten an einer übergeordneten Komponente, insbesondere an einem zu kühlenden Abschnitt eines PCs bzw. Computers. Selbstverständlich kann ein so aufgebauter Lüfter 10 auch zur Zuführung von Luft an andere Bauteile als PCs und Computer verwendet werden.

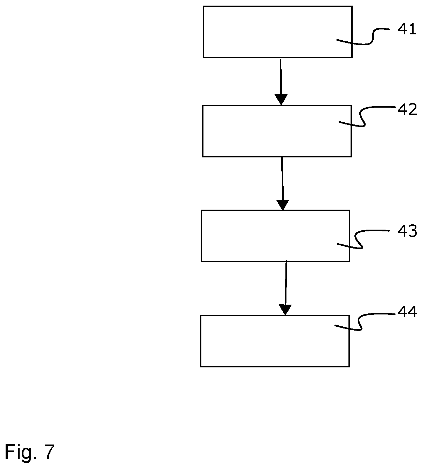

Der Lüfter 10 weist also mehrere Komponenten auf, wie den Stator 6, den Statorhalter 1 und den Wandring 5. Zumindest die genannten Komponenten Stator 6, Statorhalter 1 bzw. Statorbuchse 2 und Wandring 5 können entsprechend dem in den Figuren 1 bis 6 dargestellten Ausführungsbeispiel nach dem in Figur 7 dargestellten Verfahrensablauf miteinander verbunden werden über ein biegbares Rastelement 11, 12, welches dazu ausgestaltet ist, bei einem Fügevorgang der Komponenten 1, 2, 5 und 6 miteinander an einen Halteabschnitt 13, 14 einzurasten und eine eingerastete Position 15 einzunehmen. In der eingerasteten Position 15 ist eine Rastelement/Halteabschnittverbindung einer Komponente gegenüber einer jeweils anderen Komponente über eine Weichkomponente 16, die beim Fügevorgang komprimiert wird, auf einer Vorspannung gehalten. Die Erzeugung der Vorspannung und die Wirkrichtung der Vorspannung werden im Folgenden beschrieben.

Bei den in den Figuren 3, 4, 5 und 6 dargestellten Komponenten Statorhalter 1 und Wandring 5 erfolgt eine Verbindung über an dem Wandring 5 angeordnete Rastelemente 11, welche bei Aufbringung einer Fügekraft F unter einer Umbiegung entgegen einer radialen Richtung R einen Halteabschnitt 13 überwinden und nach Überwindung des Halteabschnitts 13 unter einer Zurückbiegung entgegen der radialen Richtung R einrasten und eine eingerastete Position 15 einzunehmen, wobei das Rastelement 11 über eine bei dem Fügevorgang zwischen dem Statorhalter und dem Wandring angeordnete, deformierten, Weichkomponente 16 in der eingerasteten Position 15 gehalten zu werden.

Bei den in den Figuren 1 und 2 dargestellten Komponenten Statorhalter 1 und Stator 6 erfolgt eine Verbindung über an dem Stator 6 angeordnete Rastelemente 12, welche bei Aufbringung einer Fügekraft F unter einer Umbiegung entgegen einer radialen Richtung R einen an der Statorbuchse 2 ausgebildeten Halteabschnitt 14 überwinden und nach Überwindung des Halteabschnitts 14 unter einer Zurückbiegung entgegen der radialen Richtung R in einer Nut 24 einrasten. In der Nut 24 nehmen die Rastelemente eine eingerastete Position 15 ein. Die Rastelemente 12 sind als biegsame Zunge 25 ausgebildete Rastelement 12, welche über eine zwischen dem Stator 6 und dem Statorhalter 1 angeordnete, deformierten, Weichkomponente 16 in der eingerasteten Position 15 unter Vorspannung gehalten werden. Die Fügekraft F komprimiert die Weichkomponente 16 so stark, dass die Weichkomponente 16 deformiert wird und anschließend das Rastelement 11 gegen den Halteabschnitt 14 drückt. Dadurch wird jegliches Spiel zwischen dem Stator 6 und dem Statorträger 1 unterbunden.

Bei der in den Figuren 5 und 6 dargestellten Verbindung zwischen dem Wandring 5 und dem Statorhalter 1 wirkt die von der deformierten Weichkomponente 16 ausgehenden Vorspannkräfte FR und FA in radialer Richtung R (Vorspannung FR) und in axialer Richtung A (Vorspannung FA). Die Vorspannung FR in radialer Richtung R drückt das Rastelement 11 fest gegen einen Käfig 4, an dem der Halteabschnitt 13 ausgebildet ist. Die Vorspannung FR in radialer Richtung R wird im Wesentlichen durch eine Kompression bzw. Deformation dreier Dichtlippen 18 der Weichkomponente 16 erzeugt bzw. aufrechterhalten. Dahingegen wird die Vorspannung FA in axialer Richtung A, die eine Rastnase 19 auf den Halteabschnitt 13 zieht, durch eine Deformation der Weichkomponente 16 zwischen einem Abschnitt 20 des Statorträgers 1 und einem Abschnitt 21 des Wandrings 5. Die Weichkomponente 16 ist zwischen dem Abschnitt 20 und dem Abschnitt 21 eingeklemmt, wodurch die Deformation in axialer Richtung A entsteht. Die drei Dichtlippen 18 drücken gegen einen Abschnitt des Rastelements 11 und einmal komplett um einen Umfang U des Wandrings 5 herum auf einen Wandringkragen 22, so dass dieser gegenüber einem Durchmesser D des unbelasteten Wandrings (siehe Figur 4) einen aufgedehnten Durchmesser D' aufweist. Durch den aufgedehnten Durchmesser D' liegen die Rastelemente 11 näher an dem Halteabschnitt 13 bzw. sie sind dorthin vorgespannt. Während des Fügevorgangs wird der Rasthaken 11 entgegen der radialen Richtung R so weit zurückgebogen, bis er eine an der Weichkomponente 16 angeformte Nase 23 berührt. Die Nase 23 verhindert ein Überbiegen der Rasthaken 11. Die Nase 23 kann sich in nicht dargestellter Weise aber auch so weit in radialer Richtung R erstrecken, dass sie den Rasthaken 11 direkt abstützt bzw. vorgespannt.

Bei der in den Figuren 2 und 3 sichtbaren Verbindung zwischen den Komponenten, die ein Statorhalter 1 und Stator 6 sind, erfolgt eine Vorspannung FA lediglich in axialer Richtung A. Die Vorspannung FA drückt dabei das Rastelement 12 in axialer Richtung A gegen den Halteabschnitt 14. Bei der in den Figuren 2 und 3 sichtbaren Verbindung zwischen den Komponenten, die ein Statorhalter 1 und Stator 6 könnte durch das Vorsehen einer nicht dargestellten Weichkomponente 16 im Bereich des Rastelements 12 in analoger Weise eine Vorspannung entgegen der radialen Richtung R generiert werden, um die Zunge 25 des Rastelements 11 fester in die Nut 24 zu drücken.

Es ist in Figur 1 ersichtlich, dass die Statorbuchse 2 im Wesentlichen zylindrisch geformt ist. Zur Erleichterung einer Zentrierung des Stators 6 auf der Statorbuchse 2 sind abgerundete Zentriernuten 26 an der Statorbuchse 2 ausgebildet, in die bei Fügen korrespondierend an dem Stator 6 angeformte abgerundete Führungssteine 27 passen. Bezugnehmend auch auf die Figuren 2 und 3 wird der Fügevorgang durch die Zentriernuten 26 und die Führungssteine 27 dadurch erleichtert, dass der Stator 6 nur in Winkellagen auf die Statorbuchse 2 aufgeschoben werden kann, in der die Rastelemente 12 in die Nuten 14 einrasten kann.

Die Weichkomponente 16 wirkt zwischen einen Wandringkragen 22, und einem zylindrischen Abschnitt 29 des Statorhalters 1 neben der die Rastelemente 11 andrückenden Funktion zusätzlich abdichtend. Feuchtigkeit kann somit nicht durch die Verbindung zwischen dem Statorhalter 1 und dem Wandringkragen 22 an den Stator 6 gelangen. Die Dichtwirkung wird durch die drei Dichtlippen 18 erhöht.

Bezugnehmend auf die Figuren 3 und 6 sind die Halteabschnitte 13 an dem Statorhalter 1 in axialer Richtung A angrenzend an den zylindrischen Abschnitt 29 angeformt. Die Halteabschnitte 13 sind an sich in radialer Richtung R nach außen erstreckenden Käfigen 4 ausgebildet, wobei jeweils zwei Rastelemente 11 einem einzigen Käfig 4 zugeordnet sind. An jedem Käfig 4 ist zwischen den zwei Rastelementen 11 eine Trennwand 30 ausgebildet, die sich von dem Statorhalter 1 bis zu den Halteabschnitten 13 erstreckt. Bei einem Bruch des Käfigs 4 im Bereich eines Halteabschnitts 13 und/oder einem Bruch eines der zwei Rastelemente 11 übernehmen ein jeweils benachbartes, unbeschädigtes Rastelement 11 und/oder ein unbeschädigter Halteabschnitt 13 die Haltefunktion.

In Figur 6 erkennt man, dass zwischen dem Rotor 9 und dem Statorträger 1 eine berührungslose Labyrinthdichtung 17 angeordnet ist. In die Labyrinthdichtung 17 gelangende Partikel werden im Betrieb durch eine Rotation des Rotors 9 um die axiale Richtung A herausgeschleudert.

In Figur 7 ist ein Verfahrensablauf zum Montieren und Verbinden eines Lüfters mit mehreren Komponenten (Statorträger 1, Wandring 5 oder Stator 6) dargestellt. In Schritt 41 erfolgt ein Bereitstellen einer Komponente (Wandring 5 oder Stator 6), an der ein biegbares Rastelement 11 oder 12 angeordnet ist. In Schritt 42 erfolgt ein Annähern der Komponente (Wandring 5 oder Stator 6) an eine Komponente (Statorträger 1), die Halteabschnitte 13, 14 aufweist und ferner ein Ausrichten der Komponente (Wandring 5 oder Stator 6) relativ zu der Komponente Statorträger 1 die Halteabschnitte 13, 14 aufweist. Weiterhin erfolgt in Schritt 42 eine Einführung der biegbaren Rastelemente 11, 12 in die Halteabschnitte 13, 14. In Schritt 43 erfolgt ein Andrücken der Komponente (Wandring 5 oder Stator 6) an die Komponente die Halteabschnitte aufweist (Statorträger 1 bzw. Statorbuchse 2), mit einer Fügekraft (F), wobei die biegbaren Rastelemente 11, 12 unter einer Umbiegung die Halteabschnitte 13, 14 überwinden und eine eingerastete Position 15 einnehmen, unter gleichzeitigen Deformation einer Weichkomponente 16. In Schritt 44 erfolgt im Prinzip lediglich ein Nachlassen der Fügekraft F, wonach die Rastelemente 11, 12 durch eine Vorspannung FA, FR in der eingerasteten Position 15 gehalten werden.

### LISTE DER BEZUGSZEICHEN

- 1: Statorträger (auch: Statorhalter)
- 2: Statorbuchse
- 3: Statorhaltekörper
- 4: Käfig
- 5: Wandring
- 6: Stator
- 7: Eisenkern
- 8: Wicklungen
- 9: Rotor
- 10: Lüfter
- 11: Rastelement
- 12: Rastelement
- 13: Halteabschnitt
- 14: Halteabschnitt
- 16: Weichkomponente
- 17: Labyrinthdichtung
- 18: Dichtlippen
- 19: Rastnase
- 20: Abschnitt
- 21: Abschnitt
- 22: Wandringkragen
- 23: Nase
- 24: Nut
- 25: Zunge
- 26: Zentriernuten
- 27: Führungssteine
- 29: Abschnitt
- 30: Trennwand
- 41: Schritt
- 42: Schritt
- 43: Schritt
- 44: Schritt
- A: axiale Richtung
- R: radiale Richtung
- FA: axiale Vorspannung
- FR: radiale Vorspannund
- F: Fügekraft
- U: Umfang

## Patentansprüche

1. Lüfter (10), aufweisend mehrere Komponenten (1, 2, 5, 6), wobei eine Komponente ein Statorträger (1) ist und eine damit fügbare Komponente ein Wandring (5) ist, wobei mindestens ein Rastelement (11) sich in axialer Richtung (A) aus dem Wandring (5) erstreckt, welches dazu ausgestaltet ist, bei einem Fügevorgang der Komponenten (1, 5) miteinander einen Halteabschnitt (13) unter einer Umbiegung des Rastelements (11) zu überwinden und nach Überwindung des Halteabschnitts (13) unter einer Zurückbiegung einzurasten und eine eingerastete Position (15) einzunehmen wobei das Rastelement (11) über eine bei dem Fügevorgang zwischen den Komponenten (1, 5) deformierte Weichkomponente (16) in der eingerasteten Position (15) unter Vorspannung in radialer Richtung R (Vorspannung FR) und in axialer Richtung A (Vorspannung FA) gehalten wird und wobei die deformierte Weichkomponente (16) auf das Rastelement (11) in radialer Richtung (R) nach außen drückt, wobei die deformierbare Weichkomponente (16) zwischen einem Wandringkragen (22), aus dem sich das mindestens eine Rastelement (11) erstreckt, und einem zylindrischen Abschnitt (29) des Statorträgers (1) angeordnet ist und neben der das Rastelement (11) mit einer Vorspannung (FA, FR) andrückenden Funktion eine abdichtende Funktion übernimmt, so dass Feuchtigkeit nicht zwischen dem Statorträger (1) und dem Wandringkragen (22) an den Stator (6) gelangen kann.

2. Lüfter (10) nach Anspruch 1, wobei der Statorträger (1) einen Stator (6) trägt und wobei der Wandring (5) an einer dem Lüfter (10) übergeordneten Komponente, insbesondere an einem zu kühlenden Abschnitt eines PCs montierbar ist.

3. Lüfter (10) nach Anspruch 1 oder 2, wobei an dem Weichelement (16) drei umlaufende Dichtlippen (18) angeformt sind.

4. Lüfter (10) nach einem der Ansprüche 1 bis 3, wobei die Halteabschnitte (13) an dem Statorträger (1) in axialer Richtung (R) angrenzend an den zylindrischen Abschnitt (29) angeformt sind, und wobei die Halteabschnitte (13) an sich in radialer Richtung (R) nach außen erstreckenden Käfigen (4) ausgebildet sind, wobei jeweils zwei Rastelemente (11) einem einzigen Käfig (4) zugeordnet sind.

5. Lüfter nach Anspruch 4, wobei an dem Käfig (4) zwischen den zwei Rastelementen (11) eine Trennwand (30) ausgebildet ist, die sich einstückig von dem Statorträger (1) bis zu den Halteabschnitten (13) erstreckt, so dass bei einem Bruch des Käfigs (4) im Bereich eines Halteabschnitts (13) oder einem Bruch eines der zwei Rastelemente (11) ein benachbarter Halteabschnitt (13) bzw. ein benachbartes Rastelement (11) die eingerastete Position (15) halten kann.

6. Lüfter (10) nach einem der vorhergehenden Ansprüche, wobei ein Rotor (9) angrenzend an den Statorträger (1) um die axiale Richtung (A) rotierbar montierbar ist, und wobei an dem Rotor (9) eine zu dem Statorträger (1) korrespondierende Labyrinthdichtung (17) angeordnet ist.

7. Verfahren zum Montieren eines Lüfters (10) nach einem der Ansprüchen 1 bis 6, wobei das Verfahren die folgenden Schritte aufweist:
1. Bereitstellung eine Wandrings (5), aufweisend mindestens ein biegbares Rastelement (11), dass sich in axialer Richtung (A) aus dem Wandring (5) erstreckt,
2. Annähern des Wandrings (5), an einen Statorträger (1), der Halteabschnitte (13) aufweist und Ausrichten des Wandrings, relativ zum Statorträger (1), der Halteabschnitte (13) aufweist, und Einführung des mindestens einen biegbaren Rastelements (11) in einen Halteabschnitt (13),
3. Andrücken des Wandrings (5), an den Statorträger (1), der Halteabschnitte aufweist, mit einer Fügekraft (F), wodurch das biegbaren Rastelement (11) unter einer Umbiegung die Halteabschnitte (13) überwindet und eine eingerastete Position (15) einnimmt, unter gleichzeitiger Deformation einer zwischen einem Wandringkragen (22), aus dem sich das mindestens eine Rastelement (11) erstreckt, und einem zylindrischen Abschnitt (29) des Statorträgers (1) angeordneten Weichkomponente (16),
4. Nachlassen der Fügekraft (F), wonach das mindestens eine Rastelemente (11) infolge der Deformation der Weichkomponente (16) unter einer Vorspannung in radialer Richtung R (Vorspannung FR) und in axialer Richtung A (Vorspannung FA) in der eingerasteten Position (15) gehalten wird.

## Claims

1. Fan (10), having a plurality of components (1, 2, 5, 6), one component being a stator carrier (1) and a component which can be joined thereto being a wall ring (5), at least one latching element (11) extending in the axial direction (A) from the wall ring (5), which latching element (11) is designed to latch a retaining section (13) when the components (1, 5) with one another, while bending the latching element (11), and, after overcoming the holding section (13), latching in while bending back and assuming a latched-in position (15), wherein the latching element (11) extends over a soft component which is deformed during the joining operation between the components (1, 5), 5) during the joining process between the components (1, 5), the latching element (11) being held in the latched position (15) under prestress in the radial direction R (prestress FR) and in the axial direction A (prestress FA), and the deformed soft component (16) pressing outwards on the latching element (11) in the radial direction (R), the deformable soft component (16) being held between a wall ring collar (22), from which the at least one latching element (11) extends, and a cylindrical section (29) of the stator carrier (1) and, in addition to the function of pressing against the latching element (11) with a prestress (FA, FR), assumes a sealing function, so that moisture cannot reach the stator (6) between the stator carrier (1) and the wall ring collar (22).

2. Fan (10) according to claim 1, wherein the stator carrier (1) carries a stator (6) and wherein the wall ring (5) can be mounted on a component arranged above the fan (10), in particular on a section of a PC to be cooled.

3. Fan (10) according to claim 1 or 2, wherein three circumferential sealing lips (18) are formed on the switch element (16).

4. Fan (10) according to any one of claims 1 to 3, wherein the retaining sections (13) are formed on the stator carrier (1) in the axial direction (R) adjacent to the cylindrical section (29), and wherein the retaining sections (13) are formed on cages (4) extending outwards in the radial direction (R), wherein in each case two detent elements (1 1) are associated with a single cage (4).

5. Fan according to claim 4, wherein a partition wall (30) is formed on the cage (4) between the two latching elements (11), which partition wall (30) extends in one piece from the stator carrier (1) to the holding sections (13), so that in the event of a breakage of the cage (4) in the region of a holding section (13) or a breakage of one of the two latching elements (11), an adjacent holding section (13) or an adjacent latching element (11) can hold the latched position (15).

6. Fan (10) according to any one of the preceding claims, wherein a rotor (9) is rotatably mountable adjacent to the stator support (1) about the axial direction (A), and wherein a labyrinth seal (17) corresponding to the stator support (1) is arranged on the rotor (9).

7. A method of mounting a fan (10) according to any one of claims 1 to 6, the method comprising the steps of:
1. providing a wall ring (5) comprising at least one bendable locking element (11) extending in axial direction (A) out of the wall ring (5),
2. approaching the wall ring (5) to a stator support (1) having retaining sections (13) and aligning the wall ring relative to the stator support (1) having retaining sections (13), and inserting the at least one flexible latching element (11) into a retaining section (13),
3. pressing the wall ring (5) against the stator carrier (1), which has retaining portions, with a joining force (F), as a result of which the flexible latching element (11) overcomes the retaining portions (13) with a bend and assumes a latched position (15), with simultaneous deformation of a soft component (16) arranged between a wall ring collar (22), from which the at least one latching element (11) extends, and a cylindrical portion (29) of the stator carrier (1),
4. release of the joining force (F), after which the at least one latching element (11) is held in the latched position (15) under a prestress in the radial direction R (prestress FR) and in the axial direction A (prestress FA) as a result of the deformation of the soft component (16).

## Revendications

1. Ventilateur (10) présentant plusieurs composants (1, 2, 5, 6), un composant étant un support de stator (1) et un composant pouvant être assemblé avec celui-ci étant une bague de paroi (5), au moins un élément d'encliquetage (11) s'étendant dans la direction axiale (A) hors de la bague de paroi (5), lequel est conçu pour, lors d'une opération d'assemblage des composants (1, 5) l'un avec l'autre, à surmonter une section de retenue (13) par un pliage de l'élément d'encliquetage (11) et, après avoir surmonté la section de retenue (13), à s'encliqueter par un pliage en retour et à prendre une position encliquetée (15), l'élément d'encliquetage (11) passant sur un élément de liaison (2) lors du processus d'assemblage entre les composants (1, 5) est maintenu dans la position encliquetée (15) sous précontrainte dans la direction radiale R (précontrainte FR) et dans la direction axiale A (précontrainte FA) et le composant mou déformé (16) exerçant une pression vers l'extérieur sur l'élément d'encliquetage (11) dans la direction radiale (R), le composant mou déformable (16) étant maintenu entre une collerette annulaire de paroi (22), à partir duquel s'étend l'au moins un élément d'encliquetage (11), et une section cylindrique (29) du support de stator (1) et assure, outre la fonction de pressage de l'élément d'encliquetage (11) avec une précontrainte (FA, FR), une fonction d'étanchéité, de sorte que l'humidité ne peut pas parvenir au stator (6) entre le support de stator (1) et la collerette annulaire de paroi (22).

2. Ventilateur (10) selon la revendication 1, dans lequel le support de stator (1) porte un stator (6) et dans lequel l'anneau mural (5) peut être monté sur un composant supérieur au ventilateur (10), en particulier sur une section à refroidir d'un ordinateur personnel.

3. Ventilateur (10) selon la revendication 1 ou 2, dans lequel trois lèvres d'étanchéité (18) périphériques sont formées sur l'élément d'aiguillage (16).

4. Ventilateur (10) selon l'une des revendications 1 à 3, dans lequel les sections de retenue (13) sont formées sur le support de stator (1) dans la direction axiale (R) de manière adjacente à la section cylindrique (29), et dans lequel les sections de retenue (13) sont formées sur des cages (4) s'étendant vers l'extérieur dans la direction radiale (R), deux éléments d'arrêt (1 1) étant respectivement associés à une seule cage (4).

5. Ventilateur selon la revendication 4, dans lequel une paroi de séparation (30) est formée sur la cage (4) entre les deux éléments d'encliquetage (11), laquelle s'étend d'un seul tenant depuis le support de stator (1) jusqu'aux sections de retenue (13), de sorte que, en cas de rupture de la cage (4) dans la zone d'une section de retenue (13) ou en cas de rupture de l'un des deux éléments d'encliquetage (11), une section de retenue (13) voisine ou un élément d'encliquetage (11) voisin peut maintenir la position encliquetée (15).

6. Ventilateur (10) selon l'une des revendications précédentes, dans lequel un rotor (9) adjacent au support de stator (1) peut être monté de manière à pouvoir tourner autour de la direction axiale (A), et dans lequel un joint labyrinthe (17) correspondant au support de stator (1) est disposé sur le rotor (9).

7. Procédé de montage d'un ventilateur (10) selon l'une quelconque des revendications 1 à 6, le procédé comprenant les étapes suivantes :
1. mise à disposition d'un anneau de paroi (5), présentant au moins un élément d'encliquetage (11) flexible, qui s'étend dans la direction axiale (A) à partir de l'anneau de paroi (5),
2. approcher l'anneau de paroi (5) d'un support de stator (1) qui présente des sections de retenue (13) et orienter l'anneau de paroi par rapport au support de stator (1) qui présente des sections de retenue (13), et introduire le au moins un élément d'encliquetage (11) flexible dans une section de retenue (13),
3. presser la bague de paroi (5) contre le support de stator (1), qui présente des sections de retenue, avec une force d'assemblage (F), ce qui fait que l'élément d'encliquetage (11) flexible surmonte les sections de retenue (13) en se courbant et prend une position encliquetée (15), avec déformation simultanée d'un composant mou (16) disposé entre un collet de bague de paroi (22), à partir duquel s'étend le au moins un élément d'encliquetage (11), et une section cylindrique (29) du support de stator (1),
4. relâchement de la force d'assemblage (F), après quoi le au moins un élément d'encliquetage (11) est maintenu dans la position encliquetée (15) sous une précontrainte dans la direction radiale R (précontrainte FR) et dans la direction axiale A (précontrainte FA) en raison de la déformation du composant mou (16).
